# EUROPEAN PATENT SPECIFICATION

(11) **EP 1 435 348 B1**
(45) Date of publication and mention of the grant of the patent: **22.07.2015**
(21) Application number: 02768105.5
(22) Date of filing: 27.09.2002
(51) Int. Cl.: B01D 46/24, B01J 35/04, B28B 1/00, C04B 35/565, C04B 37/00, F01N 3/28, F01N 3/022

(54) **METHOD OF MANUFACTURING A HONEYCOMB STRUCTURAL BODY**
VERFAHREN ZU HERSTELLUNG EINEN WABENSTRUKTURKÖRPER
PROCEDE DE FABRICATION D'UN CORPS STRUCTURAL EN NID D'ABEILLE

(30) Priority: 02.10.2001 JP 2001306097
(43) Date of publication of application: 07.07.2004
(73) Proprietor: NGK Insulators, Ltd., Nagoya-City, Aichi Pref. 467-8530 (JP)
(72) Inventor: FUJITA, Jun, Nagoya-shi, Aichi 467-8530 (JP); WADA, Yukihisa, Nagoya-shi, Aichi 467-8530 (JP)
(74) Representative: Naylor, Matthew John
(86) International application number: PCT/JP2002/009998
(87) International publication number: WO 2003/031371

(56) References cited:
- EP-A2- 1 101 910
- WO-A-02/070106
- JP-A- 1 093 473
- JP-A- 4 130 069
- JP-A- 4 367 574
- JP-A- 61 026 572
- JP-A- 2000 007 455
- PATENT ABSTRACTS OF JAPAN vol. 2002, no. 08, 5 August 2002 (2002-08-05) -& JP 2002 102627 A (IBIDEN CO LTD), 9 April 2002 (2002-04-09) & DATABASE WPI Section Ch, Week 200250 Derwent Publications Ltd., London, GB; Class H06, AN 2002-466555 & JP 2002 102627 A (IBIDEN CO LTD) 9 April 2002 (2002-04-09)

## Description

### Technical Field

The present invention relates to a honeycomb structure used in, for example, a carrier for a catalyst having a catalytic action, for use in internal combustion engine, boiler, chemical reactor, fuel cell reformer, etc. and a filter for capturing fine particles present in an exhaust gas; as well as to a process for producing such a honeycomb structure. More particularly, the present invention relates to a honeycomb structure which is superior in dimensional accuracy and which hardly generates defects such as cracking of adhered area and the like; as well as to a process for producing such a honeycomb structure.

### Background Art

Honeycomb structures are in use in, for example, a carrier for a catalyst having a catalytic action, for use in internal combustion engine, boiler, chemical reactor, fuel cell reformer, etc. and a filter for capturing fine particles present in an exhaust gas, particularly fine particles emitted from a diesel engine.

In the honeycomb structure used for such a purpose, the sharp temperature change of exhaust gas and the local heating makes non-uniform the temperature distribution inside the honeycomb structure and there have been problems such as crack generation in honeycomb structure and the like. When the honeycomb structure is used particularly as a filter for capturing a particulate matter in an exhaust gas emitted from a diesel engine (this filter is hereinafter referred to as DPF), it is necessary to burn the fine carbon particles deposited on the filter to remove the particles and regenerate the filter and, in that case, high temperatures are inevitably generated locally in the filter; as a result, a big thermal stress and cracks have tended to generate.

Hence, there were proposed processes for producing a honeycomb filter by bonding a plurality of individual segments using an adhesive. In, for example, U.S. Patent No. 4335783 is disclosed a process for producing a honeycomb filter, which comprises bonding a large number of honeycomb parts using a discontinuous adhesive. Also in JP-B-61-51240 is proposed a heat-shock resistant rotary regenerative heat exchanger which is formed by extrusion molding a matrix segment of honeycomb structure made of a ceramic material; firing them; making smooth, by processing, the outer peripheral portion of the fired segment; coating the part subject to bonding of the resulting segment with a ceramic adhesive which turns, after firing, to have substantially the same mineral composition as the matrix segment and a difference in thermal expansion coefficient of 0.1% or less at 800°C; and firing the coated segments. Also in the SAE paper 860008 of 1986 is disclosed a ceramic honeycomb structure obtained by bonding cordierite honeycomb segments with a cordierite cement. Further in JP-A-8-28246 is disclosed a ceramic honeycomb structure obtained by bonding honeycomb ceramic members with an elastic sealant made of at least a three-dimensionally intertwined inorganic fiber, an inorganic binder, an organic binder and inorganic particles.

Honeycomb structures are used generally by being accommodated in, for example, a metallic casing. When a honeycomb structure is produced from individual honeycomb segments as mentioned above, it is necessary to bond the individual segments into one piece and accommodate the one-piece material in, for example, a metallic casing. In this case, when the bonding is made according to the above-mentioned conventional bonding method, the resulting adhesive layer has a non-uniform thickness; as a result, no sufficient dimensional accuracy is obtained, resulting in dimensional inaccuracy and crack generation at adhered areas.

WO 02/070106 discloses a honeycomb filter made by bonding a plurality of honeycomb segments. Adjacent segments are brought into contact with each other via a heat conductive member and bonded to each other. WO 02/070106 claims the priority date of 1 March 2001 and was published on 12 September 2002 and is accordingly only available as prior art under Article 54(3) EPC.

JP-A-4-367574 discloses bonding of Si₃N₄ ceramic material structures at 800-1600°C using a bonding agent layer and spacer layers. The bonding agent layer plastically deforms at the bonding temperature, due to heat-induced softening or melting.

JP-A-2000-7455 discloses a process for joining ceramic honeycomb segments with an adhesive, by applying vibration to spread the adhesive evenly between the honeycomb segments. Temporary rubber spacer ribs are inserted between the ends of the honeycomb segments during the joining process.

### Disclosure of the Invention

The present invention has been made in view of such a situation, and aims at providing a honeycomb structure which is low in dimensional inaccuracy by allowing the adhesive layer present between the honeycomb segments to have an intended thickness and further a uniform thickness, and a process for producing such a honeycomb structure.

According to the present invention, there is provided a process for producing a honeycomb structure, as set out in claim 1.

In the present invention, the spacer, preferably has a thickness of 0.1 to 3.0 mm.

### Brief Description of the Drawings

Figs. 1(a) and 1(b) are each a schematic view showing a honeycomb structure produced by a process according to an embodiment of the present invention. Fig. 1(a) is a perspective view and Fig. 1(b) is a schematic top view.
Fig. 2 is a schematic sectional view showing a honeycomb structure produced by a process according to an embodiment of the present invention.
Fig. 3 is a schematic perspective view showing a form of the honeycomb segment produced by a process according to an embodiment of the present invention.
Figs. 4(a) and 4(b) are each a schematic view showing a state in which spacers are attached to a honeycomb segment produced by a process according to an embodiment of the present invention. Fig. 4(a) is a side view and Fig. 4(b) is a front view.
Figs. 5(a) and 5(b) are each a schematic view showing another state in which spacers are attached to a honeycomb segment produced by a process according to an embodiment of the present invention. Fig. 5(a) is a side view and Fig. 5(b) is a front view.
Fig. 6 is a side view of the honeycomb segment produced in Examples 1 to 3, wherein the points for measurement of thickness of adhesive layer are shown.
Fig. 7 is a view showing an example of the production process of the present invention and is a schematic perspective view indicating a state in which spacers are formed on a surface, which is to be adhered, of a honeycomb segment.
Fig. 8 is a view showing an example of the production process of the present invention and is a schematic perspective view indicating a state in which an adhesive material has been applied on a surface, which is to be adhered, of a honeycomb segment.
Fig. 9 is a view showing an example of the production process of the present invention and is a schematic perspective view indicating a state in which honeycomb segments have been adhered to each other into one piece.
Fig. 10 is a view showing an example of the production process of the present invention and is a schematic perspective view indicating a state in which a spacer-forming agent placed on a surface, which is to be adhered, of a honeycomb segment is being heated.

### Best Mode for Carrying Out the Invention

A honeycomb structure and a process for production thereof according to the present invention are described below in detail with reference to the accompanying drawings. However, the present invention is not restricted to the following embodiment. Incidentally, in the following, the term "section" means a section perpendicular to the lengthwise direction of through-holes unless otherwise specified.

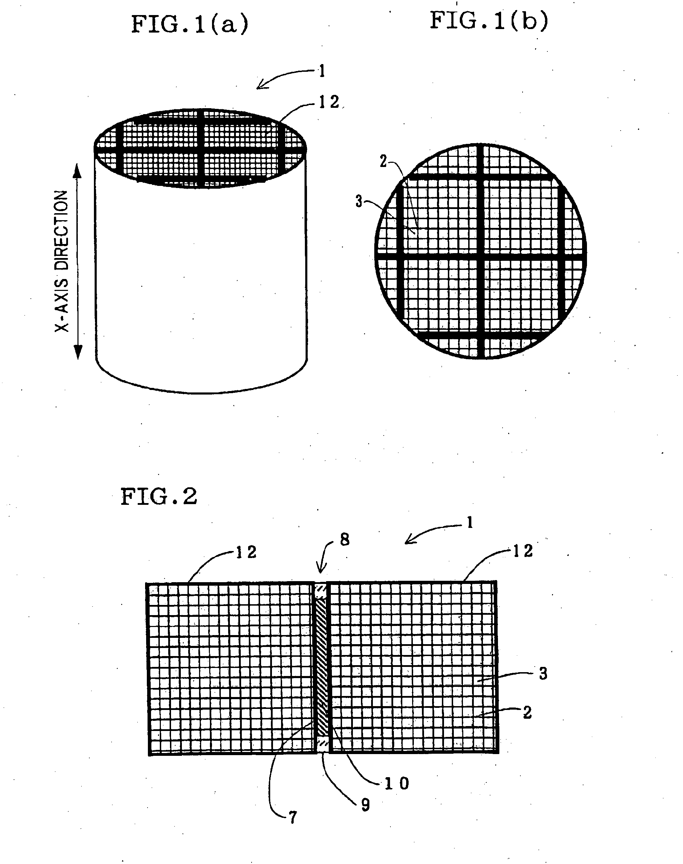

As shown in, for example, Figs. 1(a) and 1(b), a honeycomb structure 1 of the present invention is produced by making into one piece a plurality of honeycomb segments 12 made of a honeycomb having numbers of through-holes 3 extending in an X-axis direction.

The important feature of the present invention is that a spacer 10 is interposed between honeycomb segments, as shown in Fig. 2. Owing to this interposition of a spacer 10, an adhesive layer 8 can have an intended thickness on a adhesive surface 7, the thickness of the adhesive layer 8 on the adhesive surface 7 has a small fluctuation, and a honeycomb structure 1 of good dimensional accuracy can be obtained. In such a honeycomb structure 1, the adhesive layer shows stable behavior at high temperatures and, when the structure is accommodated in a casing made of a metal or the like, stress concentration caused by the difference in dimension between honeycomb segments hardly occurs; consequently, it is expected that cracks of honeycomb structure at the adhered areas are unlikely to occur.

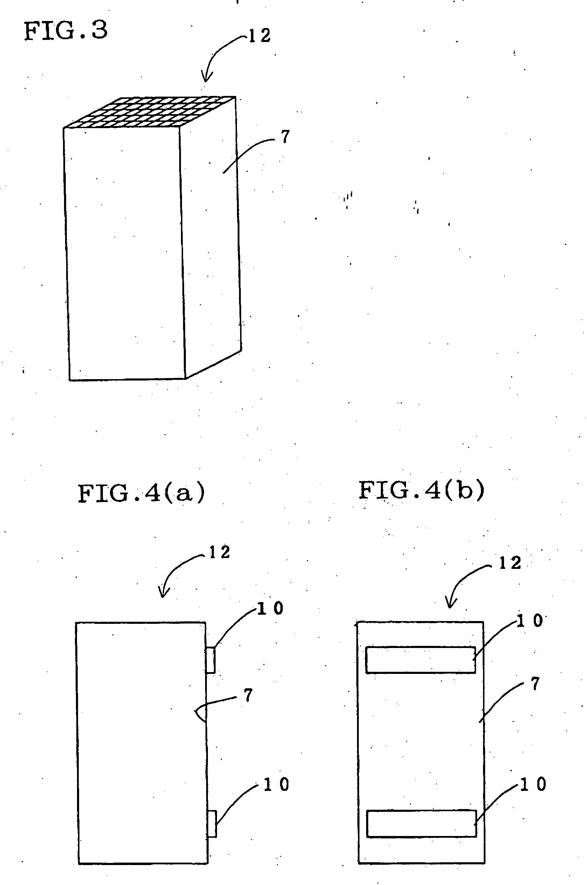

In the present invention, there is no particular restriction as to the shape of the spacer 10 as long as the spacer has a shape in which the thickness of adhesive layer 8 can keep an intended level. The shape can be any as long as it can keep the thickness of adhesive layer at an intended level, and the spacer can be, for example, a plate having a section of given thickness, or can have such a shape as the section has no uniform thickness, for example it has concavity and convexity, but comes to have an intended thickness at the projected portions at the time of adhesion. There is no particular restriction as to the thickness of the spacer 10. However, too large a thickness results in a thick adhesive layer and a large pressure loss of honeycomb structure; with too small a thickness, the effect of the present invention is hard to be obtained; therefore, such thicknesses are not preferred. The thickness of the space 10 is preferably 0.1 to 3.0 mm, more preferably 0.2 to 1.5 mm, and most preferably 0.3 to 0.8 mm. Here, when the spacer 10 has a concavity and convexity, the thickness of the spacer 10 refers to the thickness of projected portions, i.e. the thickness of portions which can keep the distance between two honeycomb segments at a given distance. There is no particular restriction, either, as to the plane shape of the spacer 10. The plane shape can be any such as square as shown in Fig. 3, triangle, other polygons, circle, ellipse or the like. There are no particular restrictions, either, as to the size or number of the spacer 10, and they can be appropriately selected so as to match the size of the adhesive surface 7. There is no particular restriction, either, as to the position of the spacer 10 on the adhesive surface 7, and the spacer 10 can preferably be provided evenly and adequately on the whole surface 7 depending upon the size and number of the spacer 10.

The material for the spacer 10 is the same material as for the ceramic adhesive. The material can be, for example, an inorganic material including the same material as for honeycomb structure or other ceramic. As to the spacer material, when it is considered that the honeycomb structure may be exposed to high temperatures during the use, the inorganic material is preferably one having a composition and high-temperature properties (e.g. thermal expansion coefficient and thermal conductivity), close to the honeycomb structure because such a material do not deteriorate the honeycomb structure or the ceramic adhesive and do not affect their high-temperature properties. Being the same material as for the ceramic adhesive, such a material homogenizes with the ceramic adhesive after bonding of honeycomb segments.

In the present invention, the adhesive layer 8 generally contains a spacer 10 and an adhesive 9. This adhesive 9 adheres honeycomb segments 12 to each other. There is no particular restriction as to the kind of the adhesive and there can be used a known adhesive matching the material of honeycomb segment. Preferred is, for example, a ceramic adhesive made of, for example, an adhesive material, which is a mixture of an inorganic fiber (e.g. a ceramic fiber), an inorganic powder (e.g. a ceramic powder), organic and inorganic binders, etc. Also preferred is an adhesive made of an adhesive material containing a sol substance (e.g. a Si sol). A plurality of different adhesives may be used and, in this case, the adhesive layer may be formed as a plurality of layers. When the adhesive layer is formed as a plurality of layers, it is preferred that the composition of, for example, the adhesive layer in contact with honeycomb segment is made so as to have a composition close to the composition of the honeycomb segment and the compositions of other adhesive layers are changed gradually. Here, the term "adhesive" means a substance constituting each adhesive layer and the term "adhesive material" means a material constituting the adhesive. Therefore, in general, the adhesive material undergoes a change, for example, a compositional change due to drying or the like, or a chemical change to become the adhesive; however, there is a case that the adhesive material and the adhesive are the same.

In the present invention, there is no particular restriction as to the thickness of the adhesive layer 8. However, too large a thickness of adhesive layer 8 results in too large a pressure loss of honeycomb structure when an exhaust gas passes through the structure; with too small a thickness, the adhesive material may not exhibit its inherent adhesivity; therefore, such thicknesses are not preferred. The thickness range of the adhesive layer 8 is preferably 0.1 to 3.0 mm, more preferably 0.3 to 2.0 mm, and particularly preferably 0.5 to 1.5 mm.

In the present invention, as to the honeycomb segment 12, its major components are preferably composed, in view of the strength, heat resistance, etc. of the honeycomb segment, of at least one kind of ceramic selected from the group consisting of silicon carbide, silicon nitride, cordierite, alumina, mullite, zirconia, zirconium phosphate, aluminum titanate, titania and combinations thereof; a Fe-Cr-Al type metal; a nickel-based metal; or metallic Si and SiC. Here, the major components refer to components which constitute 80% by mass or more of the total components and which become a main crystal phase.

In the present invention, when the honeycomb segment 12 is composed of metallic Si and SiC, the Si content specified by Si/(Si+SiC) is preferably 5 to 50% by mass, more preferably 10 to 40% by mass. The reason is that when the Si content is less than 5% by mass, the effect of Si addition is hardly obtained and, when the Si content is more than 50% by mass, the effect of heat resistance and high thermal conductivity (which is a feature of SiC) is hardly obtained. In this case, it is preferred to use an adhesive 9 containing either or both of the metal Si and the SiC.

In the present invention, there is no particular restriction as to the cell density of honeycomb segment 12 (the number of through-holes 3 per unit sectional area). Too small a cell density results in insufficiency in geometrical surface area; too large a cell density results in too large a pressure loss; therefore, such cell densities are not preferred. The cell density is preferably 0.9 to 310 cells/cm² (6 to 2,000 cells/in.²). There is no particular restriction as to the sectional shape of through-hole 3 (cell shape). The shape can be any such as polygon (e.g. triangle, square or hexagon), circle, ellipse, corrugation or the like. However, from a manufacturing standpoint, the shape is preferably any of a triangle, a square and a hexagon. There is no particular restriction, either, as to the thickness of the partition wall 2. However, too small a thickness results in a honeycomb segment of insufficient strength and too large a thickness results in too large a pressure loss; therefore, such thicknesses are not preferred. The thickness of the partition wall 2 is in a range of preferably 50 to 2,000 µm.

The honeycomb segment 12 has no particular restriction as to the shape and can take any shape. However, it is preferred that, for example, a quadrangular prism shown in Fig. 3 is used as the basic shape of the honeycomb segment, a plurality of such quadrangular prisms is bonded into one piece as shown in Figs. 1(a) and 1(b), and the shapes of the honeycomb segments constituting the outermost periphery of honeycomb structure 1 are allowed to match the circumferential shape of honeycomb structure 1. Or, it is possible to allow individual honeycomb segments to have a fan-like sectional shape.

The honeycomb structure 1 of the present invention has no particular restriction as to the sectional shape. The sectional shape can be any form such as circle shown in Figs. 1(a) and 1(b), ellipse, oval, polygon (e.g. square shown in Fig. 2, triangle or pentagon), irregular shape or the like. When the honeycomb structure of the present invention is used as a catalyst carrier in an internal combustion engine, a boiler, a chemical reactor, a reformer for fuel cell, etc., the honeycomb structure is preferred to load thereon a metal having a catalytic action. As representative metals having a catalytic action, Pt, Pd, Rh, etc. can be mentioned. The honeycomb structure is preferred to load at least one kind of these metals.

Meanwhile, when the honeycomb structure of the present invention is used as a filter such as DPF, for capturing and removing the particulate matter contained in an exhaust gas, it is preferred that the through-holes 3 of the honeycomb structure are sealed alternately at each end face of the honeycomb structure. When the through-holes 3 are sealed alternately at each end face of the honeycomb structure and when an exhaust gas containing a particulate matter is passed through the honeycomb structure from its one end face, the exhaust gas flows into the honeycomb structure 1 from those through-holes 3 not sealed at the end face, passes through a porous partition wall 2 having a filtration ability, and is discharged from those through-holes 3 not sealed at the other end face. The particulate matter is captured by the partition wall when the exhaust gas passes through the partition wall. Incidentally, as the amount of the particulate matter captured on the partition wall increases, a sharp increase in pressure loss takes place, a load to engine and a fuel consumption increase, and operability reduces; therefore, it is conducted to periodically burn and remove the particulate matter using a heating means such as heater or the like and regenerate the function of the filter. In order to promote the burning for filter regeneration, the honeycomb structure may load the above-mentioned metal having a catalytic action.

Next, description is made on a process for producing the honeycomb structure of the present invention.

In the production process for the honeycomb structure of the present invention, first, a honeycomb segment 12 is produced. There is no particular restriction as to a process for producing the honeycomb segment 12, and there can be a process generally used in production of honeycomb structure material. For example, the following process can be used.

There is used, as a raw material, at least one kind of ceramic selected from the group consisting of silicon carbide, silicon nitride, cordierite, alumina, mullite, zirconia, zirconium phosphate, aluminum titanate, titania and combinations thereof; a Fe-Cr-Al type metal; a nickel-based metal, combination of metallic Si and Sic; or the like. Thereto are added a binder such as methyl cellulose, hydroxypropoxyl methyl cellulose or the like, a surfactant, water, etc. to obtain puddle.

The puddle is subjected to, for example, extrusion molding to produce a honeycomb molded body having numbers of through-holes 3 surrounded by partition walls 2 and extending in the axial direction of the honeycomb molded body.

The honeycomb molded body is dried by, for example, a microwave, hot air or the like and then fired, whereby can be produced a honeycomb segment 12 as shown in Fig. 3. The honeycomb segment 12 produced here can have a preferred shape mentioned in the above description of the present honeycomb structure.

In the present invention, a plurality of these honeycomb segments 12 are bonded into one piece.

In this step, as shown in Figs. 4(a) and 4(b), an adhesive material is applied to at least one of two surfaces 7, which are subjected to adhering, and/or an adhesive material is applied to at least one surface of each spacer 10; the two surfaces 7 are bonded in a state that a spacer 10 is interposed between the two adhesive surfaces. In this case, bonding is preferably conducted by pressing to-be-adhered honeycomb segments 12, because it is easy and good adhesion strength can be obtained.

The adhesive material used in this step is preferred to be an adhesive material capable of forming a preferred adhesive 9 contained in an adhesive layer 8 mentioned in the above description of the present honeycomb structure. In this case, it is also preferred to apply at least two adhesive materials different in composition, in two or more times to form an adhesive layer as a plurality of layers. When the adhesive layer is formed as a plurality of layers, it is also preferred to select adhesive materials so that, for example, an adhesive layer in contact with the honeycomb segment has a composition close to the composition of the honeycomb segment and the compositions of individual adhesive layers change gradually. Depending upon the kinds of the adhesive materials used, larger adhesion strength can be obtained by further conducting drying and/or firing.

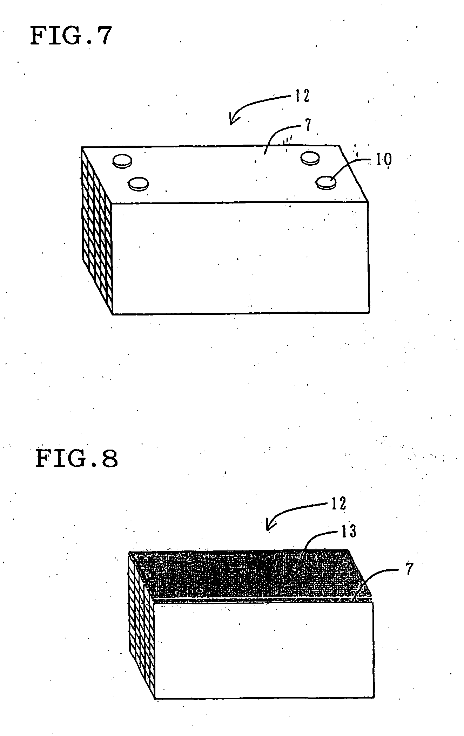

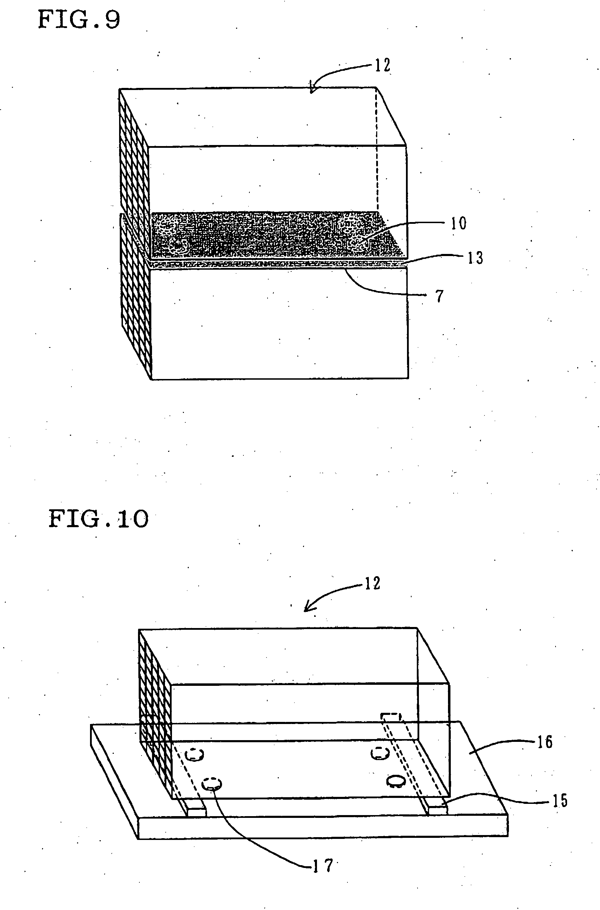

Bonding honeycomb segments into one piece comprises forming spacers 10 on a surface 7, which is to be adhered, of a honeycomb segment 12 as shown in, for example, Fig. 7, applying an adhesive material 13 as shown in Fig. 8, and bonding at least two honeycomb segments 12 as shown in Fig. 9.

The step of forming spacers 10 is a step of adhering spacers solidly to a surface 7, which is to be adhered. A spacer-forming agent is placed on a predetermined position for spacer formation in given amounts and is heated or dried, whereby the spacer adhered solidly to the surface 7, which is to be adhered, can be obtained. The spacer-forming agent is fluid. A fluid spacer-forming agent is placed on a predetermined position and solidified to obtain a spacer solidly adhered to the surface, which is to be adhered. To place a spacer-forming agent on a predetermined position, it is preferred, for example, to place the agent on a predetermined position of the surface, which is to be adhered, in given amounts using a pump capable of discharging a predetermined amount. Conversion of the placed spacer-forming agent into the spacer solidly adhered to the surface 7, which is to be adhered, is preferably conducted by heating or drying of the agent. To do it, there can be used a heating apparatus, a drying apparatus or a heating and drying apparatus, all used generally. Here, in order to allow the formed spacer to have an intended thickness, it is preferred to conduct heating and/or drying while the spacer-forming agent is being pressurized.

As one method for solidifying a spacer-forming agent on the surface, which is to be adhered, to obtain the spacer solidly adhered thereto; a case of using a hot plate 16 is shown in Fig. 10. In Fig. 10, plates 15 having a given thickness, for example, 0.5 mm are placed on a hot plate 16, and the surface on which a spacer-forming agent 17 is placed at predetermined positions is allowed to contact with the plates 15 at the part on which the spacer-forming agent is not positioned. Heating is conducted by the hot plate with a pressure being applied so that the spacer-forming agent 17 becomes the spacer of 0.5 mm in thickness. The pressure application may be made by the own weight of honeycomb segment or by the own weight of hot plate when they are turned upside down, or by using a pressurization apparatus. In this way, it is possible to form a spacer of given thickness with less fluctuation of thickness.

The spacer-forming agent is preferably a ceramic-containing slurry and also preferably contains the same components as in the honeycomb segment. There is preferred, for example, an agent obtained by adding, to the same ceramic powder as in the honeycomb segment, an inorganic fiber (e.g. a ceramic fiber), organic and inorganic binders, and a dispersing medium (e.g. water), or an agent further containing a sol-like substance (e.g. a Si sol).

The spacer-forming agent may be placed on either of two surfaces, which come to face each other via an adhesive layer, but may be placed on both surfaces. There is no particular restriction as to the amount, positions and number of the spacer-forming agent placed. The spacer-forming agent can be placed in such an amount as a desired thickness can be obtained by a method such as mentioned above, at such a good balance as an adhesive layer of uniform thickness can be obtained. Optionally, prior to the application of the spacer-forming agent, an undercoat may be applied to the surface, which is to be adhered, by spraying or the like. By applying the undercoat, the adhesion strength between spacer and adhesive surface can be increased. However, the undercoat has no function of bonding honeycomb segments to each other.

The step of applying an adhesive material to a surface, which is to be adhered, is conducted, similarly to the above description, by applying an adhesive material to either or both of two surfaces, which are to be adhered. In this case, the adhesive material may be applied to the surface already having a spacer formed thereon, the surface having no spacer formed thereon, or both of these surfaces. The adhesive material, like the spacer-forming agent, is preferably a ceramic-containing slurry. There is preferred, for example, a material obtained by adding, to the same ceramic powder as in the honeycomb segment, an inorganic fiber (e.g. a ceramic fiber), organic and inorganic binders, and a dispersing medium (e.g. water), or a material further containing a sol-like substance (e.g. a Si sol). The material of the spacer is the same as the ceramic adhesive material.

Two or more honeycomb segments on which a spacer has been formed and an adhesive material has been applied, are adhered to each other under pressure and are dried and/or heated, in the same manner as described above; thereby, they can be bonded into one piece to obtain a honeycomb structure. In this case, there is no particular restriction as to the pressure applied, and the pressure is preferably about 0.3 to 3 kgf/cm², more preferably 0.5 to 2 kgf/cm².

By producing a honeycomb structure by such a process, the positional error of spacer can be prevented. When the spacer and the adhesive are each made of a ceramic and contain the same major components, it is unnecessary to form a spacer beforehand, the above-mentioned process can be conducted automatically as one continuous step, and mass production is made possible.

When the honeycomb structure 1 produced according to the present invention is used as a filter, particularly as a DPF or the like, it is preferred that the through-holes 3 are sealed alternately by a sealing agent at each end face of the structure and it is more preferred that the through-holes 3 are sealed alternately at each end face of the structure so that each end face looks like a checkerboard pattern. The sealing by a sealing agent can be conducted by masking those through-holes not to be sealed, applying a slurry raw material to each end face of honeycomb segment, drying the resulting honeycomb segment, and firing the dried honeycomb segment. In this case, the firing is over in one step (which is preferable) when the sealing is conducted during the above-mentioned step of honeycomb segment production, i.e. after molding of honeycomb segment but before its firing. However, the sealing may be conducted after the firing and may be conducted at any timing as long as it is conducted after the molding. The material for the sealing agent used can be appropriately selected from the above-mentioned group of preferred raw materials for the honeycomb segment, and it is preferred to use the same raw material as for honeycomb segment.

In the present invention, the honeycomb structure may be loaded with a catalyst. This can be conducted by a method ordinarily used by those skilled in the art. The loading of catalyst can be conducted, for example, by wash-coating of catalyst slurry, drying and firing. This step also can be conducted at any timing as long as it is conducted after the molding of honeycomb segment.

The present invention is specifically described below by way of Examples. However, the present invention is in no way restricted to these Examples.

### (Examples, Reference Examples and Comparative Examples)

Next, the present invention is described in more detail based on Examples.

### (Production of honeycomb segment)

A silicon carbide powder and a silicon powder were used as raw materials. Thereto were added methyl cellulose, hydroxypropoxyl methyl cellulose, a surfactant and water to produce puddle. The puddle was subjected to extrusion molding and the resulting molded body was dried using a microwave and hot air. Then, the molded body was heated (for removing binder) and fired in the atmosphere to obtain a quadrangular prism-like honeycomb segment such as shown in Fig. 3, having a dimension of 58 mm x 58 mm x 150 mm (height).

### (Reference Example 1 - outside the scope of the invention)

There were prepared two honeycomb segments produced above, a paper board (as a spacer) having a dimension of 50 mm x 10 mm x 0.8 mm (thickness), and a ceramic-made adhesive material composed of 40% by mass of SiC, 20% by mass of a silica sol, 1% by mass of an inorganic auxiliary agent, 30% by mass of a ceramic fiber and 9% by mass of water. As shown in Figs. 4(a) and 4(b), the ceramic-made adhesive material was applied to a side of one honeycomb segment, i.e. the surface, which is to be adhered, of the honeycomb segment; the paper board was placed on the upper and lower areas of the side; and the two honeycomb segments were pressed-bonded and then dried; thereby was obtained a honeycomb structure in which the two honeycomb segments were bonded into one piece.

### (Comparative Example 1)

A honeycomb structure was obtained in the same operation as in Example 1 except that no paper board as spacer was used.

### (Measurement of thickness of adhesive layer)

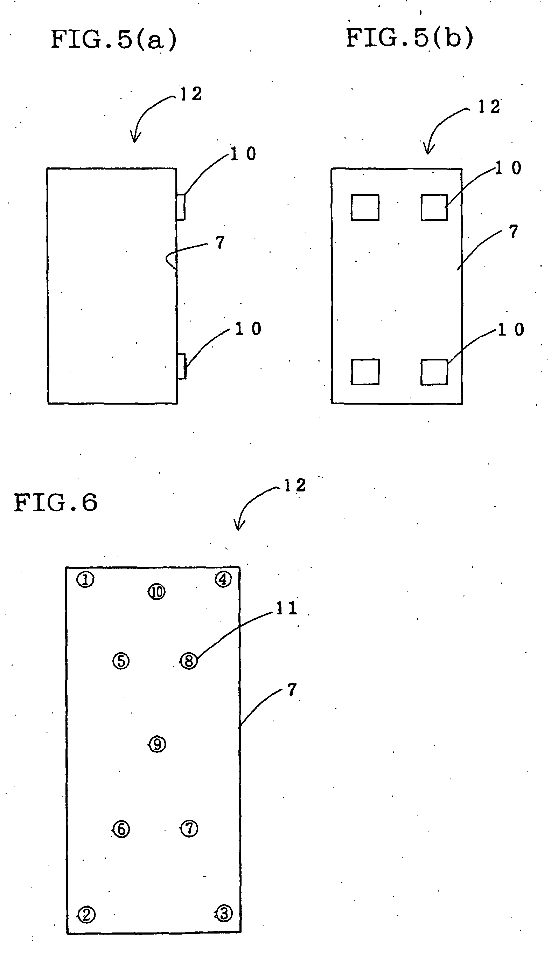

The honeycomb structures obtained in Reference Example 1 and Comparative Example 1 were measured for thickness of adhesive layer at the ten measurement points 11 shown by ① to ⑩ on the adhesive surface 7 of Fig. 6. The results of measurement are shown in Table 1.

**Table 1**

| | | | | | | | | | | | | |
|---|---|---|---|---|---|---|---|---|---|---|---|---|
| Measurement points | ① | ② | ③ | ④ | ⑤ | ⑥ | ⑦ | ⑧ | ⑨ | ⑩ | Average | Standard deviation |
| Reference Example 1 (spacer) | 0.79 | 0.78 | 0.78 | 0.81 | 0.79 | 0.81 | 0.81 | 0.80 | 0.78 | 0.78 | 0.80 | 0.013 |
| Comp. Ex. 1 (no spacer) | 0.55 | 0.97 | 1.01 | 0.66 | 0.67 | 0.84 | 0.89 | 0.67 | 0.75 | 0.61 | 0.76 | 0.157 |

| | | | | | | | | | | | | |
|---|---|---|---|---|---|---|---|---|---|---|---|---|
| (Unit: mm) | | | | | | | | | | | | |

In the honeycomb structure obtained in Reference Example 1, which had a paper board (a spacer) interposed, the thickness of the adhesive layer was substantially the same as the thickness of the paper board and therefore could be controlled at an intended thickness. Further, the fluctuation in thickness between measurement points was very small and the thickness of the adhesive layer could be kept constant.

### (Reference Example 2 - outside the scope of the invention)

There were prepared two honeycomb segments produced above, an inorganic material (as a spacer) having a dimension of 10 mm x 10 mm x 0.8 mm (thickness) and composed of 43% by mass of SiC, 23% by mass of a silica sol, 2% by mass of an inorganic auxiliary agent and 32% by mass of a ceramic fiber, and a ceramic-made adhesive material composed of 40% by mass of SiC, 20% by mass of a silica sol, 1% by mass of an inorganic auxiliary agent, 30% by mass of a ceramic fiber and 9% by mass of water. As shown in Figs. 5(a) and 5(b), the ceramic-made adhesive material was applied to a side of one honeycomb segment, i.e. the surface, which is to be adhered, of the honeycomb segment; the inorganic material was placed on the upper and lower four areas of the side; and the two honeycomb segments were pressed-bonded and then dried; thereby was obtained a honeycomb structure in which the two honeycomb segments were bonded into one piece.

### (Comparative Example 2)

A honeycomb structure was obtained in the same operation as in Reference Example 2 except that no inorganic material as spacer was used.

### (Measurement of thickness of adhesive layer)

The honeycomb structures obtained in Example 2 and Comparative Example 2 were measured for thickness of adhesive layer at the ten measurement points 11 shown by ① to ⑩ on the adhesive surface 7 of Fig. 6. The results of measurement are shown in Table 2.

**Table 2**

| | | | | | | | | | | | | |
|---|---|---|---|---|---|---|---|---|---|---|---|---|
| Measurement points | ① | ② | ③ | ④ | ⑤ | ⑥ | ⑦ | ⑧ | ⑨ | ⑩ | Average | Standard deviation |
| Reference Example 2 (spacer) | 0.79 | 0.78 | 0.81 | 0.78 | 0.81 | 0.79 | 0.80 | 0.81 | 0.80 | 0.81 | 0.80 | 0.012 |
| Comp. Ex. 2 (no spacer) | 0.60 | 0.89 | 0.70 | 0.75 | 0.61 | 0.55 | 0.97 | 1.01 | 0.66 | 0.78 | 0.75 | 0.160 |

| | | | | | | | | | | | | |
|---|---|---|---|---|---|---|---|---|---|---|---|---|
| (Unit: mm) | | | | | | | | | | | | |

In the honeycomb structure obtained in Reference Example 2, which had an inorganic material (a spacer) interposed, the thickness of the adhesive layer was substantially the same as the thickness of the inorganic material and therefore could be controlled at an intended thickness. Further, the fluctuation in thickness between measurement points was very small and the thickness of the adhesive layer could be kept constant.

### (Example 3)

20 honeycomb segments obtained in the above production of honeycomb segment were prepared. The adhesive material (as a spacer-forming agent) used in Reference Example 2 was placed on four areas (near the four corners) of the surface, which is to be adhered, of each honeycomb segment, using a metering pump for feeding. Then, as shown in Fig. 10, the honeycomb segment was placed on a hot plate provided with iron plates of 0.5 mm in thickness, followed by heating at about 160°C for about 6 seconds for solidification, to form four spacers solidly adhered on the surface, which is to be adhered, of each honeycomb segment. The thicknesses of the spacers were measured and they were in a range of 0.5±0.1 mm.

Next, as shown in Fig. 8, an adhesive material, which was the same as the spacer-forming agent, was applied to the surface of each honeycomb segment on which spacers had been formed, in a given amount. Thereafter, the surfaces of the honeycomb segments were bonded to each other to make 16 pieces of the honeycomb segments into one piece consisting of four rows by four rows, and they were pressed at a pressure of 1.0 kgf/cm². The adhesive material forced out from the adhered surfaces was removed, followed by drying, to obtain a honeycomb structure.

### (Comparative Example 3)

A honeycomb structure was obtained by the same operation as in Example 3 except that no inorganic material as spacer was used.

### (Measurement of thickness of adhesive layer)

The honeycomb structures obtained in Example 3 and Comparative Example 3 were measured for thickness of adhesive layer at the ten measurement points 11 shown by ① to ⑩ on the adhesive surface 7 of Fig. 6. The results of measurement are shown in Table 3. In the honeycomb structure obtained in Example 3, which had an inorganic material (a spacer) interposed, the fluctuation in thickness between measurement points was very small and the thickness of the adhesive layer could be kept constant at an intended level.

**Table 3**

| | | | | | | | | | | | | |
|---|---|---|---|---|---|---|---|---|---|---|---|---|
| Measurement points | ① | ② | ③ | ④ | ⑤ | ⑥ | ⑦ | ⑧ | ⑨ | ⑩ | Average | Standard deviation |
| Example 3 (spacer) | 1.01 | 0.96 | 0.97 | 1.00 | 1.00 | 0.97 | 0.97 | 0.99 | 0.97 | 1.01 | 0.99 | 0.019 |
| Comp. Ex. 3 (no spacer) | 0.87 | 0.62 | 0.65 | 1.05 | 0.85 | 0.70 | 0.76 | 0.94 | 0.80 | 1.01 | 0.83 | 0.147 |

| | | | | | | | | | | | | |
|---|---|---|---|---|---|---|---|---|---|---|---|---|
| (Unit: mm) | | | | | | | | | | | | |

### Industrial Applicability

In the honeycomb structure of the present invention, a spacer is placed between the honeycomb segments; therefore, the thickness of the adhesive layer between honeycomb segments could be controlled at an intended level and uniformly. Thereby, it was possible to obtain a honeycomb structure low in dimensional inaccuracy. Further, according to the production process of the present invention, a honeycomb structure having effects mentioned above could be produced easily. The honeycomb structure of the present invention can be preferably used in, for example, a carrier for a catalyst having a catalytic action, for use in internal combustion engine, boiler, chemical reactor, reformer for fuel cell, etc., or in a filter for capturing particulate matter present in an exhaust gas.

## Claims

1. A process for producing a honeycomb structure, comprising
a step of producing a honeycomb segment (12) having numbers of through-holes (3) surrounded by partition walls (2) and extending in the axial direction, and
a step of bonding a plurality of the honeycomb segments (12) into one piece wherein a spacer (10) is interposed between adhesive surfaces (7),
**characterized in that** the step of bonding the honeycomb segments (12) into one piece comprises
forming the spacer (10) on a surface (7), which is to be adhered, of a honeycomb segment (12), by placing a fluid spacer-forming agent (17) on the surface (7), which is to be adhered, and solidifying the agent (17),
applying an adhesive material (9) on the surface (7), which is to be adhered, of the honeycomb segment (12), and
bonding the honeycomb segments (12) by pressing and drying,
and wherein the material of the spacer (10) is the same as the ceramic adhesive material (9).

2. A process for producing a honeycomb structure according to Claim 1, **characterized in that** the spacer (10) has a thickness of 0.1 to 3.0 mm.

## Patentansprüche

1. Verfahren zur Herstellung einer Wabenstruktur, welches Folgendes umfasst:
einen Schritt zur Herstellung eines Wabensegments (12) mit einer Reihe von Durchgangslöchern (3), die von Trennwänden (2) umgeben sind und sich in axialer Richtung erstrecken, und
einen Schritt des haftschlüssigen Verbindens einer Vielzahl der Wabensegmente (12) zu einem Teil, worin ein Abstandhalter (10) zwischen den Haftflächen (7) angeordnet wird,
**dadurch gekennzeichnet, dass** der Schritt des haftschlüssigen Verbindens der Wabensegmente (12) zu einem Teil Folgendes umfasst:
das Ausbilden des Abstandhalters (10) auf einer Oberfläche (7) eines Wabensegments (12), die angehaftet werden soll, durch das Anordnen eines Mittels (17) zur Ausbildung eines Fluidabstandhalters auf der Oberfläche (7), die angehaftet werden soll, und das Verfestigen des Mittels (17),
das Aufbringen eines Haftmaterials (9) auf die Oberfläche (7) des Wabensegments (12), die angehaftet werden soll, und
das haftschlüssige Verbinden des Wabensegments (12) durch Aufdrücken und Trocknen,
wobei das Material des Abstandhalters (10) mit dem Keramikhaftmaterial (9) übereinstimmt.

2. Verfahren zur Herstellung einer Wabenstruktur nach Anspruch 1, **dadurch gekennzeichnet, dass** der Abstandhalter (10) eine Dicke von 0,1 bis 3,0 mm aufweist.

## Revendications

1. Processus pour produire une structure en nid d'abeilles, comprenant :
une étape de production d'un segment de nid d'abeilles (12) comportant des nombres de trous traversants (3) entourés par des parois de séparation (2) et s'étendant dans la direction axiale, et
une étape de liaison d'une pluralité des segments de nid d'abeilles (12) en une seule pièce, dans lequel un élément d'espacement (10) est interposé entre des surfaces adhésives (7),
**caractérisé en ce que** l'étape de liaison des segments de nid d'abeilles (12) en une seule pièce comprend :
la formation de l'élément d'espacement (10) sur une surface (7), qui doit être collée, d'un segment de nid d'abeilles (12), en plaçant un agent de formation d'élément d'espacement fluide (17) sur la surface (7), qui doit être collée, et la solidification de l'agent (17),
l'application d'un matériau adhésif (9) sur la surface (7), qui doit être collée, du segment de nid d'abeilles (12), et
la liaison des segments de nid d'abeilles (12) par pression et séchage,
et dans lequel le matériau de l'élément d'espacement (10) est identique au matériau adhésif à base de céramique (9).

2. Processus pour produire une structure en nid d'abeilles selon la revendication 1, **caractérisé en ce que** l'élément d'espacement (10) a une épaisseur de 0,1 à 3,0 mm.
